# EUROPEAN PATENT SPECIFICATION

(11) **EP 1 722 138 B1**
(45) Date of publication and mention of the grant of the patent: **12.03.2008**
(21) Application number: 06380026.2
(22) Date of filing: 31.01.2006
(51) Int. Cl.: F16K 11/20, F16K 27/06

(54) **A tap with orientable outlets**
Hahn mit verstellbaren Auslässen
Robinet avec sorties orientables

(30) Priority: 10.05.2005 ES 200501057 U
(43) Date of publication of application: 15.11.2006
(73) Proprietor: Genebre, S.A., 08908 l'Hospitalet de Llobregat (Barcelona) (ES)
(72) Inventor: Monterde Fabregat, Lluis, (Barcelona) (ES)
(74) Representative: Pastells Teixido, Manuel

(56) References cited:
- BE-A- 332 221
- DE-A1- 10 205 464
- DE-B- 1 299 963

## Description

### OBJECT OF THE INVENTION

A tap with orientable outlets.

### FIELD OF THE INVENTION

This tap is designed for the supply of water and can be fitted to the corresponding mains.

### BACKGROUND OF THE INVENTION

There are several types of taps having different shutoff means such as for example those being of the ball or of the butterfly type, said taps comprising a tube-shaped body or pipe having a shutoff handle fitted to it.

### SUMMARY OF THE INVENTION

This invention has as its object a tap having at least one water outlet being orientable in a plane being transversal to the tube-shaped body being fitted to the mains, with the particularity that the shutoff handle can be arranged at opposite sides as per the installation requirements.

The tap is for such a purpose made up with a tube-shaped body being blind-ended at its front end and provided with openings in its periphery, at least one sleeve being rotatably fitted onto said body, said at least one sleeve being provided with a radial nipple being provided with a shutoff handle.

The openings being provided in the tube-shaped body are arranged in a transversal plane in correspondence with said nipple, and between the outer periphery of said tube-shaped body and the inner periphery of the sleeve O-ring seals are fitted which provide a sealingly arranged, rotatable fitting of the sleeve onto the tube-shaped body.

The sleeve is fit to be removably fitted onto the tube-shaped body and to be secured onto this latter by means of a screw being adapted to be fitted into a peripheral groove of the tube-shaped body.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 illustrates in a perspective view the assembly making up the tap being the object of the invention;
Fig. 2 shows this tap as seen in a longitudinally sectional plan-view; and
Fig. 3 represents in a perspective view the aforementioned tap with the shutoff handles at opposite sides with respect to their position in Fig. 1.

### DETAILED DESCRIPTION

According to the drawings the tap comprises a horizontal and cylindrical, tube-shaped body (1) being blind-ended at its front end (2) and provided with a thread (3) at its rear end, two sleeves (4) and (5) being rotatably fitted onto said body and being each provided with a radial nipple (6) having a threaded open end (7) and being provided with a shutoff handle (8) with ball valve.

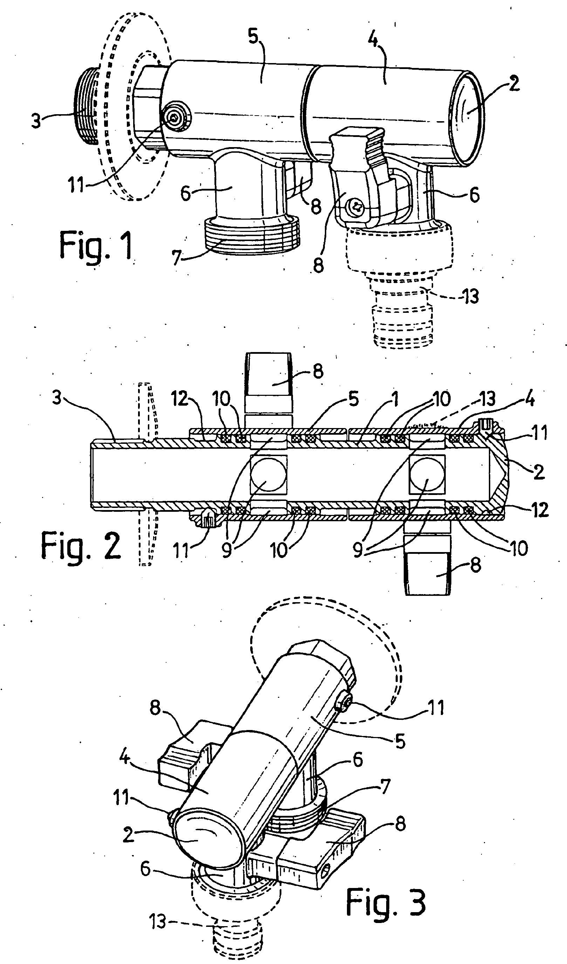

In its periphery and in a transversal plane in correspondence with the nipples (6) the tube-shaped body (1) has several openings (9) (Fig. 2) for the passage of water towards the nipples, said tube-shaped body (1) being on its outer periphery provided with grooves being each fit to receive a respective O-ring seal (10) providing a sealingly arranged, rotatable fitting of the sleeves (4) and (5) onto the tube shaped body (1).

The sleeves (4) and (5) are each fit to be removably fitted onto the tube-shaped body and to be secured onto this latter by means of a respective screw (11) being adapted to be fitted into a respective peripheral groove (12) being provided in the tube-shaped body (1).

In Fig. 1 the shutoff handles (8) are in the turned-on position, and in Fig. 3 they are in the turned-off position.

In order to fit this tap to the water supply mains the tube-shaped body (1) is fitted to the tapping outlet of said mains by means of the thread (3), thereupon the position of the shutoff handles (8) is chosen so as to have them positioned on the right- or on the left-hand side, the sleeves (4) and (5) are then fitted onto the tube-shaped body, and they are then turned till thus having arranged the outlet of the nipples (6) at the chosen angle within the 360 degree range within which they can possibly be adjusted, said position being finally secured by tightening the screws (11) into the corresponding grooves (12) of the tube-shaped body.

Numeral (13) designates the male portion of a quick connector for example for a hose, said connector being fit to be adapted to the threaded open ends (7) of the nipples (6).

## Claims

1. A tap with orientable outlets, **characterised in that** it comprises a tube-shaped body (1) being blind-ended at its front end (2) and provided with openings (9) in its periphery, at least one sleeve (4, 5) being rotatably fitted onto said body, said at least one sleeve being provided with a radial nipple (6) being provided with a shutoff handle (8).

2. A tap as per claim 1, **characterised in that** the openings (9) being provided in the tube-shaped body (1) are arranged in a transversal plane in correspondence with the presence of said nipple (6).

3. A tap as per claim 1, **characterised in that** between the outer periphery of the tube-shaped body (1) and the inner periphery of the sleeve (4, 5) O-ring seals (10) are fitted which provide a sealingly arranged, rotatable fitting of the sleeve (4, 5) onto the tube-shaped body (1).

4. A tap as per claim 1, **characterised in that** the sleeve (4,5) is fit to be removably fitted onto the tube-shaped body (1) and to be secured onto this latter by means of a screw (11) being adapted to be fitted into a peripheral groove (12) of the tube-shaped body (1).

## Patentansprüche

1. Hahn mit orientierbaren Auslässen, **dadurch gekennzeichnet, daß** er einen rohrförmigen Körper (1) umfaßt, der an seinem vorderen Ende (2) als endgeschlossener Körper ausgeführt und mit Öffnungen (9) in seinem Umfang versehen ist, wobei mindestens eine Buchse (4, 5) auf dem obengenannten Körper in drehbarer Anordnung aufgesetzt ist, wobei die genannte mindestens eine Buchse mit einem radialen, mit einem Absperrhahn (8) versehenen Nippel (6) versehen ist.

2. Hahn nach Anspruch 1, **dadurch gekennzeichnet, daß** die im rohrförmigen Körper (1) vorgesehenen Öffnungen (9) sich in einer der Anordnung des genannten Nippels (6) entsprechenden Querebene befinden.

3. Hahn nach Anspruch 1, **dadurch gekennzeichnet, daß** zwischen dem äußeren Umfang des rohrförmigen Körpers (1) und dem inneren Umfang der Buchse (4, 5) O-Ring-Dichtungen (10) eingestzt sind, die eine drehbare und dichte Anordnung der Buchse (4, 5) auf dem rohrförmigen Kórper (1) zustande bringen.

4. Hahn nach Anspruch 1, **dadurch gekennzeichnet, daß** die Buchse (4, 5) sich lösbar auf den rohrförmigen Körper (1) aufschieben läßt und mit ihm durch eine in eine Umfangsnut (12) des rohrförmigen Körpers (1) eingreifende Schraube (11) befestigt werden kann.

## Revendications

1. Robinet avec des sorties orientables, **caractérisé en ce qu'**il comprend un corps tubulaire (1) borgne à son extrémité avant (2) et muni d'ouvertures (9) dans sa périphérie, au moins une douille (4, 5) étant montée mobile en rotation sur ledit corps, ladite au moins une douille étant munie d'un raccord radial (6) étant muni d'une vanne de passage (8).

2. Robinet, d'après la revendication 1, **caractérisé en ce que** les ouvertures (9) étant agencées dans le corps tubulaire (1) sont disposées en un plan transversal en correspondance avec la présence dudit raccord (6).

3. Robinet, d'après la revendication 1, **caractérisé en ce que**, entre la périphérie extérieure du corps tubulaire (1) et la périphérie intérieure de la douille (4, 5), sont montés des joints toriques (10) qui fournissent un montage étanche et mobile en rotation de la douille (4, 5) sur le corps tubulaire (1).

4. Robinet, d'après la revendication 1, **caractérisé en ce que** la douille (4, 5) est apte à être amoviblement montée sur le corps tubulaire (1) et à être fixée à celui-ci au moyen d'une vis (11) étant adaptée pour s'emboîter dans une rainure périphérique (12) du corps tubulaire (1).
